# EUROPÄISCHE PATENTANMELDUNG

(11) **EP 1 959 150 A1**
(43) Veröffentlichungstag der Anmeldung: **20.08.2008**
(21) Anmeldenummer: 08001267.7
(22) Anmeldetag: 24.01.2008
(51) Int. Cl.: F16D 13/72, F16D 13/58, C21D 9/00

(54) **Reibungskupplung mit Bauteil aus oberflächengehärtetem Grauguss**

(30) Priorität: 15.02.2007 DE 102007007423; 18.06.2007 DE 102007027903; 19.06.2007 DE 102007028599
(71) Anmelder: LuK Lamellen und Kupplungsbau Beteiligungs KG, 77815 Bühl (DE)
(72) Erfinder: Skora, Jonathan, 1140 Evere (BE); Michel, Bruno, 76133 Karlsruhe (DE)

(57) **Zusammenfassung**

Reibungskupplung mit einem Gehäuse, einer Anpressplatte und einem zwischen Gehäuse und Anpressplatte verspannbaren Energiespeicher, über den die Anpressplatte in Schließrichtung der Reibungskupplung beaufschlagbar ist, wobei wenigstens eine Funktionsfläche aufweist, die zumindest thermisch gehärtet ist.
Vorzugsweise wird der Energiespeicher durch eine Tellerfeder gebildet, die am Gehäuse verschenkbar gelagert ist und die Anpressplatte beaufschlagt, wobei zumindest die Kontaktbereiche der Anpressplatte mit der Tellerfeder gehärtet sind.
Vorzugsweise besteht wenigstens das eine Bauteil aus Gusseisen mit Lamellengraphit (GGL).

## Beschreibung

Die Erfindung betrifft eine Reibungskupplung mit wenigstens einem Gehäuse, einer Anpressplatte und zumindest einem zwischen Gehäuse und Anpressplatte verspannbaren Energiespeicher, über den die Anpressplatte in Schließrichtung der Reibungskupplung beaufschlagbar ist.

Solche Reibungskupplungen werden insbesondere für Personenkraftfahrzeuge und Nutzfahrzeuge eingesetzt, wobei insbesondere im Bereich der Nutzfahrzeuge Gehäuse aus Guss zum Einsatz kommen können. Letzteres ist insbesondere bei Reibungskupplungen bzw. Kupplungsaggregaten für Traktoren bzw. Schlepper der Fall, welche sehr oft zwei Reibungskupplungen umfassen. Reibungskupplungen der eingangs genannten Art sind beispielsweise durch die DE 37 42 354 A1, die DE 42 14 628 A1, die DE 1 804 335 A1, die DE 37 40 160 A1 und die US 3,185,274 bekannt geworden.

Der vorliegenden Erfindung lag die Aufgabe zugrunde, durch zumindest partielle Verbesserung der Oberflächeneigenschaften von Gussbauteilen einer Reibungskupplung die Funktion bzw. Lebensdauer und Verschleißfestigkeit einer solchen Reibungskupplung zu verbessern. Weiterhin sollen mittels der erfindungsgemäßen Maßnahmen Möglichkeiten geschaffen werden, die Reibungskupplung bezüglich ihres thermischen Verhaltens zu verbessern. Auch soll die funktionell verbesserte Reibungskupplung in einfacher Weise montierbar und kostengünstig herstellbar sein.

Die der Erfindung zugrunde liegenden Aufgaben werden unter anderem bei einer Reibungskupplung der eingangs genannten Art dadurch erzielt, dass wenigstens ein die Reibungskupplung bildendes Bauteil aus Eisengusswerkstoff besteht und wenigstens eine Funktionsfläche aufweist, die zumindest thermisch gehärtet ist. Das aus Eisengusswerkstoff bestehende Bauteil kann beispielsweise durch die Anpressplatte und/oder das Kupplungsgehäuse gebildet sein. Die wenigstens eine Funktionsfläche, welche erfindungsgemäß zumindest thermisch.gehärtet ist, kann beispielsweise durch die Reibfläche der Anpressplatte, die Abstützbereiche der Anpressplatte für den wenigstens einen Energiespeicher, die Abstützbereiche des Kupplungsgehäuses für den wenigstens einen Energiespeicher, die Abstützbereiche für die Köpfe der Schrauben zur Befestigung der Reibungskupplung bzw. des Gehäuses an einem Schwungrad gebildet sein. Bei Reibungskupplungen für Nutzfahrzeuge werden Betätigungshebel verwendet, die in Lagerböcken des aus Guss hergestellten Kupplungsgehäuses verschwenkbar gelagert sind. Bei solchen Reibungskupplungen können zumindest die Aufnahmen in den Lagerböcken für die Hebellagerstifte gehärtet sein.

Insbesondere bei einer Reibungskupplung, bei der der Energiespeicher durch eine Tellerfeder gebildet ist, welche am Gehäuse verschwenkbar gelagert ist und eine aus Guss hergestellte Anpressplatte unmittelbar beaufschlagt, ist es besonders vorteilhaft, wenn wenigstens die Kontaktbereiche der Anpressplatte mit der Tellerfeder gehärtet sind. Durch eine derartige Ausgestaltung kann zumindest der Verschleiß an diesen Kontaktbereichen verringert werden, so dass über die Lebensdauer der Reibungskupplung deren Funktion verbessert wird. Es kann jedoch auch durch die erfindungsgemäße Maßnahme die Ausdehnung der Kontaktbereiche verringert werden, wodurch wiederum eine bessere Belüftung der Reibungskupplung erzielt werden kann. Letzteres kann insbesondere bei Reibungskupplungen, welche eine Anpressplatte, die auf der ihrer Reibfläche abgewandten Seite nockenartige Vorsprünge aufweist, welche Abstützbereiche für die Tellerfeder bilden, erzielt werden. Durch Verringerung der umfangsmäßigen Breite der nockenartigen Vorsprünge können nämlich die zum radialen Durchströmen einer Kühlluftzirkulation zur Verfügung stehenden Querschnittsbereiche vergrößert werden. Durch die mögliche Verringerung der Kontakt- bzw. Abstützbereiche zwischen Gehäuse und Tellerfeder und/oder insbesondere zwischen Anpressplatte und Tellerfeder kann auch die Wärmeübertragung zwischen diesen sich berührenden Bauteilen verringert werden.

Letzteres ist insbesondere zwischen Anpressplatte und Tellerfeder vorteilhaft, da, wie bereits erwähnt, zusätzlich zur Verminderung der zwischen diesen Bauteilen vorhandenen Kontaktflächen eine günstigere Kühlung erzielt werden kann. Dadurch kann auch eine Veränderung der Federkennlinie der Tellerfeder infolge zu großer thermischer Einflüsse vermieden werden. Weiterhin kann eine bessere Auslegung der Tellerfederkennlinie erfolgen, was wiederum eine Optimierung des Ausrückkraftverlaufes ermöglicht. Insbesondere kann dadurch die Differenz zwischen Ausrückkraftmaximum und dem darauf folgenden Ausrückkraftminimum reduziert werden.

Die zumindest partielle Oberflächenhärtung der Gussbauteile kann beispielsweise mittels eines Induktivhärteverfahrens erfolgen. Für manche Anwendungsfälle kann jedoch auch ein Flammhärten oder ein Laserstrahloberflächenhärten zur Anwendung kommen.

Das erfindungsgemäße Härten kann in besonders vorteilhafter Weise bei Verwendung von Bauteilen, die aus Gusseisen mit Lamellengraphit (so genanntes GGL) bestehen, angewandt werden. Der Gusswerkstoff kann dabei zumindest einen Legierungszusatz aufweisen, wie zum Beispiel Titan, Molybdän, Mangan, Kobalt usw., welche die Eigenschaften des Gusseisens an den jeweiligen Einsatzfall anpasst.

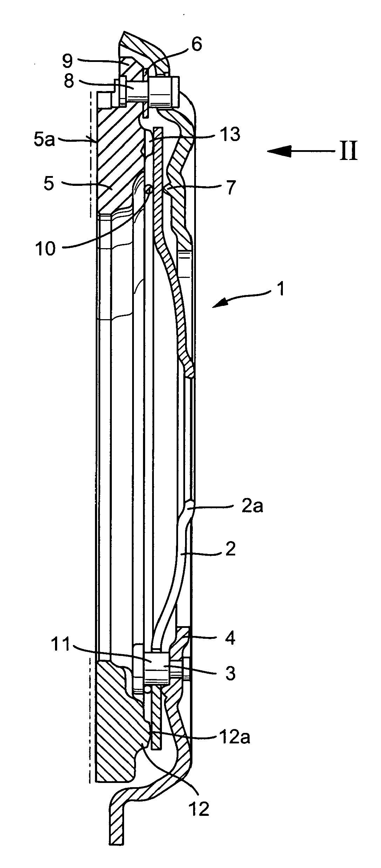

Anhand der Figur sei die Erfindung näher erläutert.

Die in der Figur dargestellte Reibungskupplung 1 besitzt einen Energiespeicher, der hier durch eine Tellerfeder 2 gebildet ist. Die Tellerfeder 2 ist über ein Widerlager 3 hier nach Art eines zweiarmigen Hebels an einem Gehäuse 4 befestigt und abgestützt. Die Tellerfeder 2 ist axial zwischen dem Gehäuse 4 und einer Anpressplatte 5 elastisch verspannbar, so dass sie diese Anpressplatte 5 in Richtung der Reibbeläge einer nicht näher dargestellten Kupplungsscheibe beaufschlagt. Bei dem dargestellten Ausführungsbeispiel ist das Gehäuse 4 durch einen so genannten Blechdeckel gebildet. Dieses Gehäuse 4 könnte jedoch auch als Eisengussbauteil ausgebildet sein. Das Gehäuse 4 und die Anpressplatte 5 sind in an sich bekannter Weise beispielsweise über Blattfederelemente 6 miteinander drehfest, jedoch axial verlagerbar verbunden. Hierfür ist das eine Ende der Blattfederelemente 6 über Niete am Gehäuse 4 befestigt, und das andere Ende über Niete 8 an einem über die Reibfläche 5a der Anpressplatte 5 radial vorstehenden Nocken 9. Die in der Figur ersichtliche Stellung der Tellerfeder 2 und der Anpressplatte 5 entspricht derjenigen bei auf einem Schwungrad einer Brennkraftmaschine befestigter neuer Kupplung 1 und bei neuen Reibbelägen. Zum Ausrücken der Kupplung muss die Tellerfeder 2 im Bereich der Spitzen 2a der Tellerfederzungen in Richtung des Pfeils II beaufschlagt werden.

Die Schwenklagerung 3 umfasst bei dem dargestellten Ausführungsbeispiel einstückig mit dem Gehäuse 4 ausgebildete, in ringartiger Anordnung vorgesehene Verschwenkbereiche 7. Die Verschwenkbereiche 7 können durch einen durchgehenden, ringartigen Vorsprung oder aber durch eine Vielzahl von in ringartiger Anordnung vorgesehenen, segmentförmigen Anformungen gebildet sein. Auf der dem Gehäuse 4 abgewandten Seite der Tellerfeder 2 ist Letztere über einen Drahtring 10 axial abgestützt, welcher mittels Nietbolzen 11 mit dem Gehäuse 4 verbunden ist. Radial außen beaufschlagt die Tellerfeder 2 in ringförmiger Anordnung vorgesehene einzelne Nocken 12 der Anpressplatte 5. Zwischen den umfangsmäßig verteilten, zum Beispiel segmentförmig ausgebildeten Nocken 12, sind radiale Belüftungsdurchlässe 13 gebildet. Die umfangsmäßige Erstreckung dieser Belüftungsdurchlässe 13 ist abhängig von der umfangsmäßigen Erstreckung der Nocken 12. Dies bedeutet, dass, je kürzer diese Nocken 12 sind, desto besser kann die Kupplung 1 mittels einer Luftzirkulation durch die Durchlässe 13 gekühlt werden.

Erfindungsgemäß ist die als Eisengussbauteil ausgebildete Anpressplatte 5 zumindest partiell, also stellenweise, thermisch gehärtet. Eine derartige Härtung kann in besonders vorteilhafter Weise zumindest an den Abstützbereichen 12a der Nocken 12 für die Tellerfeder 2 erfolgen. Dadurch wird gewährleistet, dass, über die Lebensdauer der Reibungskupplung 1 betrachtet, praktisch kein bzw. nur ein sehr geringer Verschleiß an den Abstützbereichen 12a der Nocken 12 auftritt. Dies ermöglicht die umfangsmäßige Erstreckung der Nocken 12 zu reduzieren, so dass, wie bereits erwähnt, eine bessere Kühlung der Druckplatte 1 ermöglicht wird. Letzteres ist insbesondere bei Kupplungen für Nutzkraftfahrzeuge von großer Wichtigkeit.

Grundsätzlich können jedoch auch andere Bereiche der Anpressplatte 5 eine erhöhte Härte durch thermische Behandlung erhalten. So kann beispielsweise die Reibfläche 5a oder aber die Bereiche eines Nockens 9, der zur Abstützung der Blattfedern 6 dient, gehärtet werden. Auch kann es sinnvoll sein, die Anpressplatte zumindest oberflächenmäßig vollständig zu härten. Die Härtung der Anpressplatte 5 kann jedoch auch derart vorgenommen werden, dass eine größere Härtentiefe erzeugt wird oder gar die Anpressplatte 5 praktisch durchgehärtet wird.

Sofern das Gehäuse 4 oder andere Bauteile einer Reibungskupplung aus Eisengusswerkstoff hergestellt sind, können auch diese zumindest stellenweise eine Härtung erhalten. So könnten beispielsweise die Abwälzbereiche 7 für die Tellerfeder 2 bei einem aus Guss hergestellten Gehäuse 4 gehärtet werden.

Durch Härten zumindest der Kontaktbereiche 12a der Anpressplattennocken 12 können die üblicherweise zur Vermeidung von Verschleiß an dieser Stelle eingesetzten Drahtringen bzw. Oberflächenbeschichtungen entfallen. Dadurch wird eine kostengünstige Herstellung der Reibungskupplung gewährleistet.

Die zumindest stellenweise Härteerhöhung der Gussbauteile kann durch Induktivhärten, Einsatzhärten, Laserstrahlhärten oder Flammhärten erzeugt werden. Für Grauguss bzw. Guss mit Lamellengraphit bietet sich in besonders vorteilhafter Weise ein sogenanntes Laserumschmelzhärten an. Bei einem derartigen Härteverfahren wird eine schmale Randzone des Werkstückes aufgeschmolzen, wobei eine rasche Erstarrung bzw. Abkühlung zu einem feinen, ledeburitischen Gefüge führt. Für die meisten Anwendungsfälle ist es zweckmäßig, wenn bei Verwendung von Grauguss mit Lamellengraphit ein partielles Randschichthärten an den kritischen Funktionsflächen Anwendung findet.

Für manche Anwendungsfälle kann es jedoch auch zweckmäßig sein, wenn eine Volumenhärtung der Gussbauteile erfolgt.

In vorteilhafter Weise können die bei Reibungskupplungen verwendeten Gussbauteile auch einem Glüharbeitsgang ausgesetzt werden, um die gewünschten Veränderungen der Festigkeit des Werkstoffes zu erzielen.

Besonders vorteilhaft ist es, wenn der zu härtende Eisengusswerkstoff ein weitgehend perlitisches Ausgangsgefüge aufweist. Besonders zweckmäßig ist es, wenn vor dem Abschrecken zumindest im Bereich der zu härtenden Oberflächenabschnitte eine weitgehend mit Kohlestoff angereicherte, feste Lösung (Austenit) vorliegt.

Obwohl die erfindungsgemäße, zumindest partielle Oberflächenhärtung von Kupplungsbauteilen insbesondere bei Gusssorten mit Lamellengraphit (GGL) 15 bis 25 Anwendung finden kann, kann eine entsprechende Härtung auch bei anderen Gusssorten Anwendung finden, wobei bei manchen Gusssorten evtl. eine entsprechende Umschmelzung der zu härtenden Oberflächenbereiche notwendig sein kann. Letzteres kann beispielsweise mittels eines hochenergetischen Laserstrahls erfolgen.

### Bezugszeichenliste

- 1: Reibungskupplung
- 2: Tellerfeder
- 2a: Spitzen
- 3: Widerlager
- 4: Gehäuse
- 5: Anpressplatte
- 5a: Reibfläche
- 6: Blattfedersegmente
- 7: Verschwenkbereiche
- 8: Niete
- 9: Nocken
- 10: Drahtring
- 11: Nietbolzen
- 12: Nocken
- 12a: Abstützbereiche
- 13: Belüftungsdurchlässe

## Patentansprüche

1. Reibungskupplung mit wenigstens einem Gehäuse, einer Anpressplatte und zumindest einem zwischen Gehäuse und Anpressplatte verspannbaren Energiespeicher, über den die Anpressplatte in Schließrichtung der Reibungskupplung beaufschlagbar ist, **dadurch gekennzeichnet, dass** wenigstens ein die Reibungskupplung bildendes Bauteil aus Eisen-Gusswerkstoff besteht und wenigstens eine Funktionsfläche aufweist, die zumindest thermisch gehärtet ist.

2. Reibungskupplung nach Anspruch 1, **dadurch gekennzeichnet, dass** der Energiespeicher durch eine Tellerfeder gebildet ist, die am Gehäuse verschwenkbar gelagert ist und die Anpressplatte beaufschlagt, wobei zumindest die Kontaktbereiche der Anpressplatte mit der Tellerfeder gehärtet sind.

3. Reibungskupplung nach Anspruch 2, **dadurch gekennzeichnet, dass** die Anpressplatte auf der ihrer Reibfläche abgewandten Seite nockenartige Vorsprünge aufweist, welche Abstützbereiche für die Tellerfeder bilden, wobei zumindest die diese Abstützbereiche bildenden Gussabschnitte gehärtet sind.

4. Reibungskupplung nach Anspruch 1 bis 3, **dadurch gekennzeichnet, dass** das wenigstens eine Bauteil aus Gusseisen mit Lamellengraphit (GGL) besteht.

5. Reibungskupplung nach einem der Ansprüche 1 bis 4, **dadurch gekennzeichnet, dass** der Gusswerkstoff Legierungszusätze aufweist.
